# EUROPÄISCHE PATENTANMELDUNG

(11) **EP 4 052 889 A1**
(43) Veröffentlichungstag der Anmeldung: **07.09.2022**
(21) Anmeldenummer: 21160690.0
(22) Anmeldetag: 04.03.2021
(51) Int. Cl.: B29C 65/60, B29C 65/00, B29C 65/24, B29C 65/10, B29C 65/14

(54) **NIETVERFAHREN UND NIETVORRICHTUNG FÜR NIETDOME AUS KUNSTSTOFF**

(71) Anmelder: 3con Anlagebau GmbH, 6341 Ebbs (AT)
(72) Erfinder: AUER, Hannes, 6334 Schwoich (AT)
(74) Vertreter: Flach Bauer Stahl Patentanwälte Partnerschaft mbB

(57) **Zusammenfassung**

Bei einem Nietverfahren und einer Nietvorrichtung zum Verbinden zweier Teile (36, 38) mittels eines Nietdoms (4) aus Kunststoff wird der Nietstempel (20) von seiner Rückseite her berührungslos mittels Wärmestrahlung oder durch Beaufschlagung mit Heißgas auf eine zum Plastifizieren des Nietdoms (4) geeignete Plastifizierungstemperatur erwärmt und der Nietdom (4) durch Kontakt mit dem erwärmten Nietstempel (22) plastifiziert.

## Beschreibung

Die Erfindung betrifft ein Nietverfahren und eine Nietvorrichtung zum Verbinden zweier Teile mittels eines Nietdoms aus Kunststoff gemäß dem Oberbegriff der Ansprüche 1, 4 und 6.

Es ist bekannt, zwei Teile mittels eines Nietdoms (Nietpin oder Nietzapfen) aus Kunststoff, der an einem der Teile angeformt oder befestigt ist, miteinander zu verbinden. Der Nietdom wird dabei durch eine Öffnung eines anderen Teils hindurchgeführt. Anschließend wird üblicherweise der Nietdom auf eine Plastifizierungstemperatur erwärmt und mit einem auf den Nietdom aufgesetzten Nietstempel derart verformt, dass der verformte Nietdom das andere Teil übergreift. Nach einer Abkühlphase, während der der Nietdom auf seine Erstarrungstemperatur abgekühlt wird, wird der Nietstempel vom Nietdom abgehoben. Die beiden Teile sind nun mittels des Nietdoms formschlüssig miteinander verbunden.

Zum Erwärmen des Nietdoms sind verschiedene Verfahren bekannt. Üblicherweise wird der Nietdom mittels eines elektrischen Heizelements, durch Anströmen von Heißluft oder mittels Ultraschall auf seine Plastifizierungstemperatur gebracht. Weiterhin ist es grundsätzlich bereits bekannt, den Nietdom mittels Infrarotstrahlen zu erwärmen.

Nachteilig ist bei diesen bekannten Verfahren, dass sie aufgrund relativ langer Aufheiz- und Abkühlzeiten häufig nicht die gewünschten kurzen Taktzeiten im automatisierten Betrieb ermöglichen. Ein weiterer Nachteil ist, dass beim Erwärmen des Nietdoms häufig auch die den Nietdom umgebenden Bereiche der zu verbindenden Teile derart erwärmt werden, dass es in diesen Bereichen zu Beschädigungen in Form von unerwünschten Farb- und Strukturänderungen der Teile kommt. Dies ist insbesondere dann, wenn die Farb- und Strukturänderungen auf der sichtbaren Seite der Teile liegen, häufig nicht tolerierbar.

Der Erfindung liegt daher die Aufgabe zugrunde, ein Nietverfahren und eine Nietvorrichtung zum Verbinden zweier oder mehrerer Teile mittels eines Nietdoms aus Kunststoff zu schaffen, mit dem bzw. der das Vernieten der Teile besonders schnell, effektiv und ohne Beschädigung der den Nietdom umgebenden Bereiche der Teile möglich ist.

Diese Aufgabe wird erfindungsgemäß mit einem Nietverfahren gemäß Anspruch 1 und einer Nietvorrichtung gemäß den Ansprüchen 4 und 6 gelöst. Vorteilhafte Ausführungsformen der Erfindung sind in den weiteren Ansprüchen angegeben.

Beim erfindungsgemäßen Nietverfahren wird der Nietstempel von seiner Rückseite her berührungslos mittels Wärmestrahlung oder durch Beaufschlagung mit Heißgas auf eine zum Plastifizieren des Nietdoms geeignete Plastifizierungstemperatur erwärmt und der Nietdom durch Kontakt mit dem erwärmten Nietstempel plastifiziert.

Beim erfindungsgemäßen Nietverfahren erfolgt das Erwärmen des Nietdoms auf seine Plastifizierungstemperatur somit ausschließlich oder zumindest überwiegend über den Nietstempel. Hierzu wird der Nietstempel berührungslos, d. h. ohne mechanischen Kontakt mit einer Wärmequelle, mittels Wärmestrahlung oder durch Beaufschlagung mit Heißgas, insbesondere Heißluft, in kürzester Zeit aufgeheizt. Der aufgeheizte Nietstempel überträgt die Wärme nach dem Aufsetzen gezielt und ohne wesentliche Wärmeverluste an die Umgebung auf den Nietdom. Die Zykluszeiten können dadurch verringert werden. Weiterhin können auch wärmebedingte Beschädigungen der umgebenden Bereiche, insbesondere Farb- und Strukturveränderungen, verhindert werden. Da der Nietstempel keine mechanische Verbindung zur Wärmequelle hat, kann der Nietstempel bei Bedarf auf einfache Weise ausgetauscht werden.

Vorteilhafterweise wird der Nietstempel mittels Infrarotstrahlung erwärmt. Andere Strahlungsquellen zum Erwärmen des Nietstempels sind prinzipiell denkbar, beispielsweise eine breit gefächerte Laserstrahlung. Wird der Nietstempel mittels Heißgas erwärmt, besteht das Heißgas zweckmäßigerweise aus heißer Luft.

Vorteilhafterweise wird der Nietstempel nach dem Verformen des Nietdoms durch ein gasförmiges Kühlmittel abgekühlt, das auf die Rückseite des Nietstempels geleitet wird. Zweckmäßigerweise wird als gasförmiges Kühlmittel kalte Luft verwendet. Auch das Abkühlen des verformten Nietdoms erfolgt somit vorzugsweise ausschließlich oder überwiegend über den Nietstempel, was eine schnelle Wärmeübertragung und kurze Abkühlzeiten ermöglicht.

Die erfindungsgemäße, zur Durchführung des vorstehend beschriebenen Nietverfahrens ausgebildete Nietvorrichtung gemäß Anspruch 4 weist eine Wärmestrahlungsquelle zur berührungslosen Erwärmung des Nietstempels mittels Wärmestrahlung auf, wobei die Wärmestrahlungsquelle hinter dem Nietstempel derart angeordnet ist, dass die Wärmestrahlung gezielt auf den Nietstempel gerichtet ist. Die Wärmestrahlungsquelle ist bevorzugt eine Infrarot-Strahlungsquelle.

Die erfindungsgemäße, zur Durchführung des vorstehend beschriebenen Nietverfahrens ausgebildete Nietvorrichtung gemäß Anspruch 6 weist eine Heißgasquelle zur Erwärmung des Nietstempels mittels Heißgas auf, wobei die Heißgasquelle mindestens einen Heißgasauslass aufweist, der hinter dem Nietstempel derart angeordnet ist, dass das Heißgas auf die Rückseite des Nietstempels geleitet wird. Die Heißgasquelle ist bevorzugt eine Heißluftquelle.

Die erfindungsgemäße Nietvorrichtung weist die im Zusammenhang mit dem Nietverfahren beschriebenen Vorteile auf.

Gemäß einer vorteilhaften Ausführungsform umfasst die Nietvorrichtung eine mit einem gasförmigen Kühlmittel arbeitende Kühleinrichtung mit mindestens einer Kühlmittelleitung, die einen auf den Nietstempel ausgerichteten Kühlmittelauslass aufweist, derart, dass das Kühlmittel zum Nietstempel geleitet wird und der Nietstempel mittels des Kühlmittels auf eine eine Erstarrung des Nietdoms bewirkende Temperatur bringbar ist. Vorzugsweise sind eine oder mehrere derartige Kühlmittelleitungen vorgesehen, die das Kühlmittel von verschiedenen Seiten oder zentrisch auf den Nietstempel leiten.

Vorteilhafterweise ist der Nietstempel napfförmig ausgebildet und umfasst eine Stirnwand, die eine mit dem Nietdom in Kontakt bringbare Formfläche aufweist, und eine hülsenförmige Umfangswand. Die hülsenförmige Umfangswand bewirkt, dass das Heißgas und/oder das gasförmige Kühlmittel auf die Rückseite der Stirnwand des Nietstempels konzentriert wird, wodurch das Aufheizen und Abkühlen des Nietdoms besonders schnell und effektiv durchgeführt werden kann.

Vorteilhafterweise ist die Umfangswand mit der Stirnwand lediglich über Stege verbunden, zwischen denen Freiräume angeordnet sind, die sich über den überwiegenden Teil des Umfangs der Umfangswand erstrecken. Diese Freiräume ermöglichen das problemlose Abführen der durch die Wärmestrahlung erwärmten Luft bzw. des Heißgases und des gasförmigen Kühlmittels aus dem Innenraum der Nietvorrichtung und von der Rückseite des Nietstempels nach außen.

Vorteilhafterweise umfasst die Nietvorrichtung eine Nietstempelhalteeinrichtung, die eine Aufnahmehülse mit einem Endbereich aufweist, in dem der Nietstempel befestigt ist, wobei die Wärmestrahlungsquelle innerhalb der Aufnahmehülse derart angeordnet ist oder der Heißgasauslass der Heißgasquelle derart auf den Nietstempel ausgerichtet ist, dass die Wärmestrahlung oder das Heißgas rückseitig auf die Stirnwand des Nietstempels geleitet wird. Hierdurch kann eine sehr kompakte, effektiv und schnell arbeitende Nietvorrichtung geschaffen werden.

Vorzugsweise ist der Kühlmittelauslass innerhalb oder an der Aufnahmehülse und insbesondere in Nachbarschaft des Nietstempels angeordnet. Besonders bevorzugt ist es hierbei, wenn die Kühlmittelleitung angrenzend an den Nietstempel in die Aufnahmehülse mündet oder sich zentrisch innerhalb der Aufnahmehüse befindet. Hierdurch werden für die Kühlluft oder ein anderes Kühlgas innerhalb der Aufnahmehülse kurze, direkte Wege vom Kühlmittelauslass zur Stirnwand des Nietstempels geschaffen, was ebenfalls zur schnellen und effektiven Kühlung des Nietstempels beiträgt.

Bevorzugt besteht der Nietstempel aus Metall, insbesondere Stahl oder Messing, mit hoher Wärmeleitfähigkeit. Hierdurch können besonders kurze Aufheiz- und Abkühlzeiten des Nietstempels erreicht werden.

Besonders bevorzugt ist es, wenn die Stirnwand des Nietstempels dünnwandig ausgebildet ist. Auch dies trägt zur Verkürzung der Aufheiz- und Abkühlzeiten bei.

Vorteilhafterweise weist der Nietstempel eine mattierte oder dunkle Rückseite zur Beschleunigung der Wärmeaufnahme auf.

Die Erfindung wird nachfolgend anhand der Zeichnungen beispielhaft näher erläutert. Es zeigen:
- Figur 1:: eine räumliche Darstellung der erfindungsgemäßen Nietvorrichtung,
- Figur 2:: einen teilweise schematischen Längsschnitt durch den unteren Abschnitt der Nietvorrichtung von Figur 1 und einen unterhalb der Nietvorrichtung angeordneten Nietdom,
- Figur 3:: einen beispielhaften Nietstempel schräg von unten,
- Figur 4:: den Nietstempel von Figur 3 schräg von oben,
- Figur 5:: einen Längsschnitt durch den Nietstempel, wobei der Schnitt in der Ebene der Stege liegt,
- Figur 6:: einen Längsschnitt durch den Nietstempel, wobei der Schnitt in der Ebene zwischen den Stegen liegt, und
- Figuren 7a bis 7c:: Längsschnitte durch den unteren Abschnitt der Nietvorrichtung und den Nietdom, wie in Figur 2 gezeigt, wobei unterschiedliche Stufen bei der Herstellung der Nietverbindung gezeigt sind.

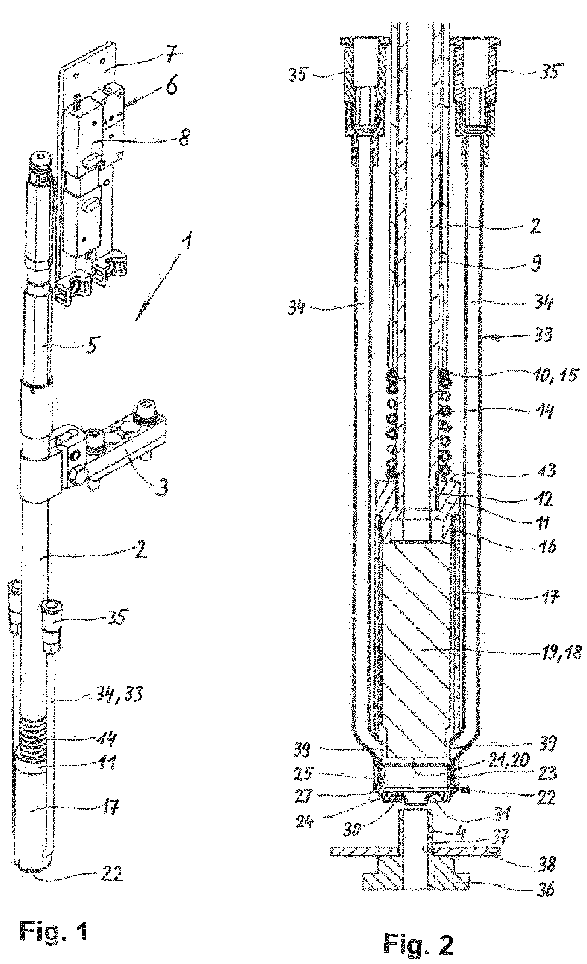

Figur 1 zeigt eine Nietvorrichtung 1 mit einer Führungshülse 2 und einem Halteelement 3, an dem die Führungshülse 2 befestigt ist. Mittels des Halteelements 3 kann die Nietvorrichtung 1 zumindest in ihrer Längsrichtung, d.h. im gezeigten Ausführungsbeispiel in vertikaler Richtung, mittels eines nicht dargestellten Bewegungsmechanismus bewegt werden.

Im gezeigten Ausführungsbeispiel ist die Führungshülse 2 vertikal angeordnet, während sich das Halteelement 3 in der Form eines Querarms horizontal erstreckt. Die Führungshülse 2 ist dabei an einem Ende des Querarms beispielsweise mittels einer Klemmbefestigung befestigt. Andere Arten und Ausrichtungen der Führungshülse 2 und des Halteelements 3 sind ohne weiteres möglich.

Durch eine Bewegung der Nietvorrichtung 1 in ihrer Längsrichtung kann die Nietvorrichtung 1 auf einen Nietdom 4 (Figur 2) aufgesetzt und von diesem abgehoben werden.

Die Führungshülse 2 ist an ihrem oberen (hinteren bzw. rückseitigen) Ende mittels eines länglichen Mehrkantelements 5 verlängert, das zur Winkelverstellung der Nietvorrichtung 1 dient.

Weiterhin ist aus Figur 1 ersichtlich, dass die Nietvorrichtung 1 ein Anschlussmodul 6 mit einer Halteplatte 7 umfasst, auf der elektrische Steckanschlüsse 8 für einen Temperatursensor und für eine Wärmestrahlungsquelle 19 befestigt sind, die in Figur 2 schematisch dargestellt ist und beim gezeigten Ausführungsbeispiel eine Infrarot-Strahlungsquelle ist.

Wie aus Figur 2 ersichtlich, ist in der Führungshülse 2 eine rohrförmige Haltestange 9 längsverschiebbar angeordnet. Die Haltestange 9 erstreckt sich nach unten über das untere Ende 10 der Führungshülse 2 hinaus.

Am unteren Ende der Haltestange 9 ist ein Haltesockel 11 befestigt, wobei die Befestigung beispielsweise mittels eines Schraubgewindes 12 erfolgen kann. Der Außendurchmesser des Haltesockels 11 ist größer als derjenige der Haltestange 9, so dass eine Stirnfläche 13 des Haltesockels 11 gegenüber der Haltestange 9 eine Durchmesserstufe bildet.

Zwischen dem Haltesockel 11 und dem unteren Ende 10 der Führungshülse 2 ist eine Druckfeder 14 angeordnet, welche die Haltestange 9 umgibt. Die Druckfeder 14 stützt sich mit ihrem unteren Ende an der Stirnfläche 13 des Haltesockels 11 bzw. an einer dort anliegenden Zwischenscheibe und mit ihrem oberen Ende an einer unteren Stirnfläche 15 der Führungshülse 2 ab. Aufgrund dieser Anordnung kann der Haltesockel 11 zusammen mit der Haltestange 9 relativ zur Führungshülse 2 und entgegen der Kraft der Druckfeder 14 nach oben verschoben werden, wenn die Aufsetzkraft der Nietvorrichtung 1 auf den Nietdom 4 die entgegengesetzt gerichtete Kraft der Druckfeder 14 übersteigt.

Am Haltesockel 11 ist vorzugsweise mittels eines Schraubgewindes 16 eine Aufnahmehülse 17 befestigt, die sich in Längsrichtung der Haltestange 9 nach unten erstreckt. Die Wärmestrahlungsquelle 19 ist innerhalb der Aufnahmehülse 17 angeordnet.

Die Wärmestrahlungsquelle 19 ist mit Stromleitungen verbunden, die im Inneren der Haltestange 9 nach oben und durch das Mehrkantelement 5 hindurch zum zugeordneten Steckanschluss 8 geführt und mit einer entsprechenden Stromquelle verbunden sind. Die Wärmestrahlungsquelle 19 erzeugt vorzugsweise Infrarotstrahlen, die von einer unteren Abstrahlfläche 21 auf einen Nietstempel 22 abgestrahlt werden, um diesen schnell auf eine zum Plastifizieren des Nietdoms 4 geeignete Temperatur zu erwärmen.

Anstelle der Wärmestrahlungsquelle 19 kann auch eine Heißgasquelle verwendet werden, um den Nietstempel 22 mittels Heißgas, insbesondere Heißluft, auf die zum Plastifizieren des Nietdoms 4 geeignete Temperatur zu erwärmen. Das Heißgas kann zentral, beispielsweise durch die Haltestange 9 hindurch, oder durch äußere Heißgasleitungen zum Nietstempel 22 geleitet werden. Im Fall einer Erwärmung des Nietstempels 22 durch Heißgas kann die Nietvorrichtung anstelle der Wärmestrahlungsquelle 19 ein Heißgaszufuhrelement 18 mit einem Heißgasauslass 20 aufweisen, der hinter dem Nietstempel 22 bzw. auf dessen Rückseite derart angeordnet ist, dass das Heißgas auf die Rückseite des Nietstempels 22 geleitet wird.

Der Nietstempel 22 ist am unteren Ende der Aufnahmehülse 17 beispielsweise mittels eines Schraubgewindes 23 befestigt. Nietstempel 22, Aufnahmehülse 17 Haltesockel 11 und Haltestange 9 bilden somit eine starre Einheit, die relativ zur Führungshülse 2 und entgegen der Druckkraft der Druckfeder 14 in Längsrichtung der Führungshülse 2, d. h. im gezeigten Ausführungsbeispiel nach oben, verschoben werden kann, wenn die Aufsetzkraft, mit der der Nietstempel 22 auf den Nietdom 4 aufgesetzt wird, die Höhe der Federkraft übersteigt. Dies ist beispielsweise dann der Fall, wenn der Nietstempel 22 am Ende der Zustellbewegung an einem der zu verbindenden Teile zur Anlage kommt.

Der Nietstempel 22 umfasst eine Stirnwand 24 und eine hülsenförmige Umfangswand 25, die in den unteren Endbereich der Aufnahmehülse 17 eingeschraubt ist. Eine andere Befestigung, beispielsweise eine Schweißverbindung, ist ohne weiteres möglich. Weiterhin ist es auch denkbar, Aufnahmehülse 17 und Nietstempel 22 einteilig auszubilden. Der Nietstempel 22 ist im wesentlichen napf- oder becherförmig.

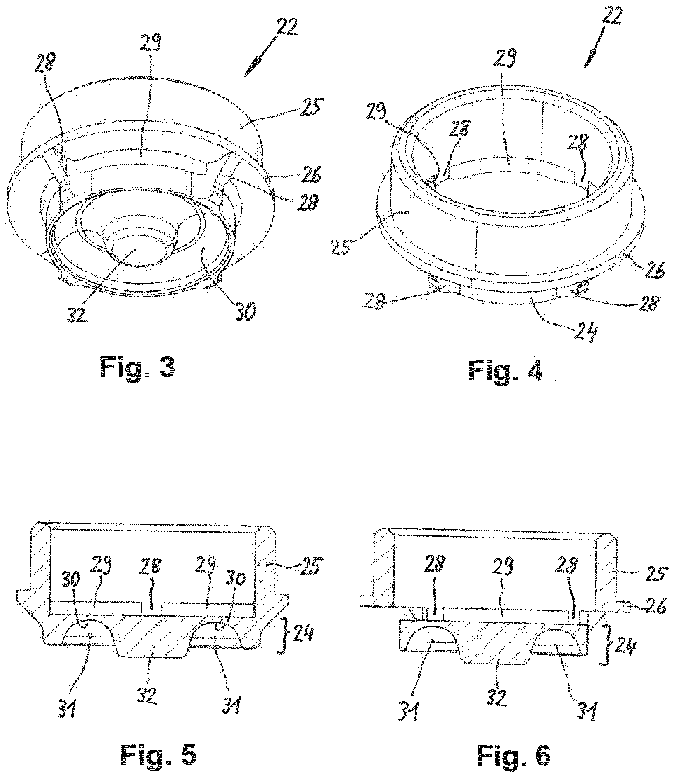

Wie insbesondere aus den Figuren 3 bis 6 ersichtlich, weist die Umfangswand 25 des Nietstempels 22 einen radial nach außen vorstehenden Kragen 26 auf. Dieser Kragen 26 dient als Axialanschlag für den Nietstempel 22 zum Anschlagen an einer unteren Stirnwand 27 der Aufnahmehülse 17 (Figur 2), wenn der Nietstempel 22 in die Aufnahmehülse 17 eingeschraubt wird.

Die Stirnwand 24 des Nietstempels 22 ist mit Abstand unterhalb der Umfangswand 25 angeordnet und mit dieser über vier Stege 28 verbunden. Weiterhin kann, wie beim Ausführungsbeispiel gezeigt, der Außendurchmesser der Stirnwand 24 geringfügig kleiner sein als der Innendurchmesser der Umfangswand 25. Zwischen der Umfangswand 25 und der Stirnwand 24 sind somit Freiräume 29 vorhanden, die sich zwischen den Stegen 28 in Umfangsrichtung erstrecken. Über diese Freiräume 29 kann Heißluft, die zum Erwärmen des Nietstempels 22 dient oder bei der Bestrahlung des Nietstempels 22 mit Wärmestrahlung entsteht, sowie die zum Abkühlen des Nietstempels 22 verwendete Kaltluft aus dem Inneren des Nietstempels 22 abgeführt werden.

An der dem Nietdom 4 zugewandten Seite weist die Stirnwand 24 eine Formfläche 30 auf, die auf den Nietdom 4 aufgesetzt werden kann und entsprechend der Form ausgebildet ist, die der Nietdom 4 nach seinem Verformungsvorgang erhalten soll. Im gezeigten Ausführungsbeispiel wird die Formfläche 30 durch eine kreisförmig umlaufende Vertiefung 31 gebildet, die einen zentralen Zapfen 32 der Stirnwand 24 umgibt. Der Durchmesser des Zapfens 32 ist derart bemessen, dass der Zapfen 32 in das Innere des hülsenförmigen Nietdoms 4 eingeführt werden kann. Die Formfläche 30 weist einen vorbestimmten Radius auf.

Die Stirnwand 24 des Nietstempels 22 ist vorzugsweise und insbesondere im Bereich der Formfläche 30, d. h. im Bereich der Vertiefung 31, dünnwandig ausgebildet und weist eine hohe Wärmeleitfähigkeit auf, so dass die Stirnwand 24 schnell aufgeheizt und abgekühlt werden kann. Vorzugsweise beträgt die Dicke der Stirnwand 24 im Bereich des Scheitelpunkts der Formfläche 30 lediglich 1 - 10 %, insbesondere 1 - 5 %, des Durchmessers der Stirnwand 24. Der Nietstempel 22 besteht vorzugsweise aus einem Metall mit hoher Wärmeleitfähigkeit, insbesondere Stahl oder Messing.

Das Abkühlen des Nietstempels 22 und damit des verformten Nietdoms 4 erfolgt über eine Kühleinrichtung 33, die im gezeigten Ausführungsbeispiel zwei Kühlmittelleitungen 34 umfasst. Über Anschlüsse 35 können die Kühlmittelleitungen 34 mit weiteren, nicht dargestellten Kühlmittelzuführleitungen verbunden werden. Mittels der Kühlmittelleitungen 34 kann dem Nietstempel 22 ein gasförmiges Kühlmittel, insbesondere Kaltluft, zugeführt werden.

Die Kühlmittelleitungen 34 erstrecken sich im dargestellten Ausführungsbeispiel diametral gegenüberliegend längs und außerhalb der Führungshülse 2 und der Aufnahmehülse 17 und münden unmittelbar oberhalb des Nietstempels 22 über Kühlmittelauslässe 39 in das Innere der Aufnahmehülse 17. Das gasförmige Kühlmittel wird dabei in Richtung des Nietstempels 22, vorzugsweise direkt zur Stirnwand 24, geleitet. Alternativ hierzu ist es auch möglich, dass das gasförmige Kühlmittel auf andere Weise zum Nietstempel 22 geleitet wird, beispielsweise zentral durch das Innere der Haltestange 9 hindurch.

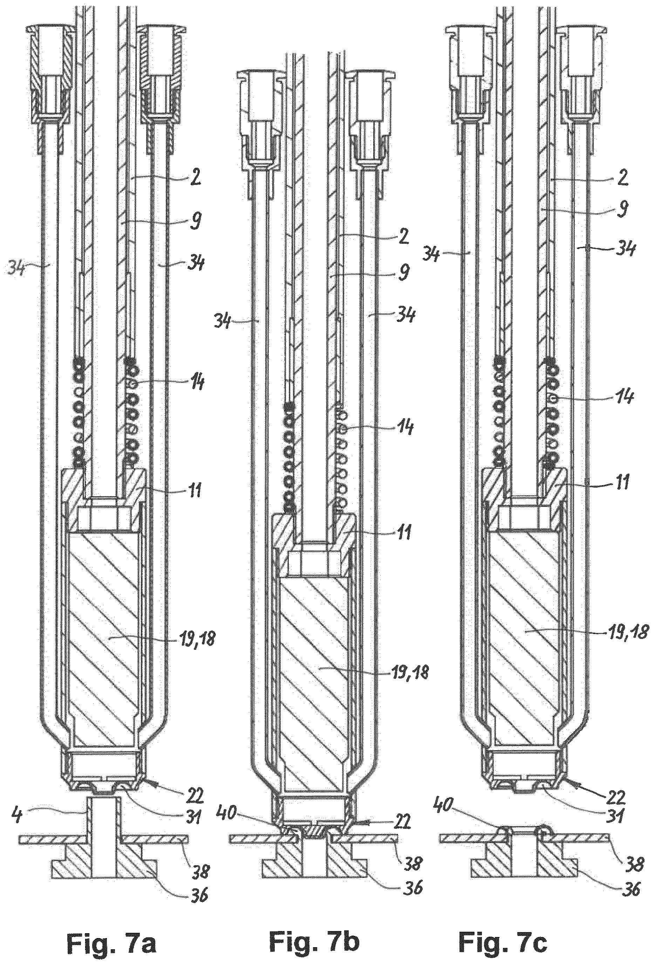

Anhand der Figuren 7a bis 7c wird im Folgenden das erfindungsgemäße Nietverfahren näher beschrieben.

Figur 7a zeigt im Längsschnitt einen unteren Abschnitt der Nietvorrichtung 1, deren Nietstempel 22 anfangs mit geringem Abstand oberhalb des Nietdoms 4 und fluchtend zu diesem angeordnet ist.

Der aus Kunststoff bestehende Nietdom 4 ist an einem ersten Teil 36 angeformt und erstreckt sich durch eine Öffnung 37 eines zweiten Teils 38 hindurch, das auf dem ersten Teil 36 aufliegt und mit diesem verbunden werden soll. Weiterhin ist der Nietdom 4 hülsenförmig ausgebildet und steht um ein vorbestimmtes Maß über das zweite Teil 38 hinaus nach oben vor.

In diesem Zustand wird die Wärmestrahlungsquelle 19 aktiviert und Wärmestrahlung auf die Rückseite des Nietstempels 22, d. h. insbesondere auf dessen Stirnwand 24, abgestrahlt, bis die Stirnwand 24 und damit die Formfläche 30 eine Nietdom-Plastifizierungstemperatur erreicht hat, d. h. eine Temperatur, die geeignet ist, um den Nietdom 4 zu erweichen. Mittels eines nicht näher dargestellten Temperatursensors wird die Temperatur des Nietstempels 22 überwacht.

Anschließend wird, wie aus Figur 7b ersichtlich, die Nietvorrichtung 1 abgesenkt und auf den Nietdom 4 aufgesetzt. Der über das zweite Teil 38 hinausragende Abschnitt des Nietdoms 4 wird dabei mittels des Nietstempels 22 durch Wärmeübertragung plastifiziert. Beim zunehmenden Absenken der Nietvorrichtung 1 füllt die plastifizierte Masse des Nietdoms 4 die Vertiefung 31 aus und nimmt deren Gestalt an, wodurch ein Nietdomkopf 40 gebildet wird, der das zweite Teil 38 formschlüssig übergreift.

In Figur 7b ist die Nietvorrichtung 1 in ihrer am weitesten abgesenkten Stellung gezeigt, in der der Nietstempel 22 auf dem zweiten Teil 38 aufliegt und der Nietdomkopf 40 fertig ausgeformt ist. In diesem Zustand wird die Wärmestrahlungsquelle 19 abgeschaltet und die Kühleinrichtung 33 aktiviert, um gasförmiges Kühlmittel, insbesondere Kühlluft, über die Kühlmittelleitungen 34 auf die Rückseite des Nietstempels 22, insbesondere auf dessen Stirnwand 24, zu leiten. Hierdurch wird der Nietstempel 22 auf eine Nietdom-Erstarrungstemperatur abgekühlt, d. h. auf eine Temperatur, bei welcher der verformte Nietdom 4 erstarrt. Das Abkühlen des Nietdoms 4 erfolgt durch Kälteübertragung vom Nietstempel 22 auf den Nietdom 4.

Nach dem Erstarren des Nietdoms 4 wird die Zufuhr des gasförmigen Kühlmittels durch die Kühlmittelleitungen 34 hindurch gesperrt und die Nietvorrichtung 1 wieder vom Nietdom 4 abgehoben, wie aus Figur 7c ersichtlich. Die Wärmestrahlungsquelle 19 kann nun zum erneuten Aufheizen des Nietstempels 22 wieder aktiviert werden, um einen weiteren Nietvorgang zu starten.

## Patentansprüche

1. Nietverfahren zum Verbinden zweier Teile (36, 38) mittels eines Nietdoms (4) aus Kunststoff, wobei der Nietdom (4) mittels eines Nietstempels (22) verformt wird, **dadurch gekennzeichnet, dass** der Nietstempel (22) von seiner Rückseite her berührungslos mittels Wärmestrahlung oder durch Beaufschlagung mit Heißgas auf eine zum Plastifizieren des Nietdoms (4) geeignete Plastifizierungstemperatur erwärmt und der Nietdom (4) durch Kontakt mit dem erwärmten Nietstempel (22) plastifiziert wird.

2. Nietverfahren nach Anspruch 1, **dadurch gekennzeichnet, dass** der Nietstempel (22) mittels Infrarotstrahlung erwärmt wird.

3. Nietverfahren nach Anspruch 1 oder 2, **dadurch gekennzeichnet, dass** der Nietstempel (22) nach dem Verformen des Nietdoms (4) durch ein gasförmiges Kühlmittel abgekühlt wird, das auf die Rückseite des Nietstempels (20) geleitet wird.

4. Nietvorrichtung zum Verbinden zweier Teile (36, 38) mittels eines Nietdoms (4) aus Kunststoff, mit einem mit dem Nietdom (4) in Kontakt bringbaren Nietstempel (20) zum Verformen des Nietdoms (4), **gekennzeichnet durch** eine Wärmestrahlungquelle (19) zur berührungslosen Erwärmung des Nietstempels (20) mittels Wärmestrahlung, wobei die Wärmestrahlungsquelle (19) hinter dem Nietstempel (20) derart angeordnet ist, dass die Wärmestrahlung gezielt auf den Nietstempel (22) gerichtet ist.

5. Nietvorrichtung nach Anspruch 4, **dadurch gekennzeichnet, dass** die Wärmestrahlungsquelle (19) eine Infrarot-Strahlungsquelle ist.

6. Nietvorrichtung zum Verbinden zweier Teile (36, 38) mittels eines Nietdoms (4) aus Kunststoff, mit einem mit dem Nietdom (4) in Kontakt bringbaren Nietstempel (20) zum Verformen des Nietdoms (4), **gekennzeichnet durch** eine Heißgasquelle zur Erwärmung des Nietstempels (22) mittels Heißgas, wobei die Heißgasquelle mindestens einen Heißgasauslass (20) aufweist, der hinter dem Nietstempel (22) derart angeordnet ist, dass das Heißgas auf die Rückseite des Nietstempels (22) geleitet wird.

7. Nietvorrichtung nach einem der Ansprüche 4 bis 6, **dadurch gekennzeichnet, dass** die Nietvorrichtung (1) eine mit einem gasförmigen Kühlmittel arbeitende Kühleinrichtung (33) mit mindestens einer Kühlmittelleitung (34) umfasst, die einen auf den Nietstempel (22) gerichteten Kühlmittelauslass (39) aufweist, derart, dass das Kühlmittel zum Nietstempel (22) geleitet wird und der Nietstempel (22) mittels des Kühlmittels auf eine eine Erstarrung des Nietdoms (4) bewirkende Temperatur bringbar ist.

8. Nietvorrichtung nach einem der Ansprüche 4 bis 7, **dadurch gekennzeichnet, dass** der Nietstempel (22) napfförmig ausgebildet ist und eine Stirnwand (24), die eine mit dem Nietdom (4) in Kontakt bringbare Formfläche (30) aufweist, und eine hülsenförmige Umfangswand (25) umfasst.

9. Nietvorrichtung nach Anspruch 8, **dadurch gekennzeichnet, dass** die Umfangswand (25) mit der Stirnwand (24) lediglich über Stege (28) verbunden ist, zwischen denen Freiräume (29) angeordnet sind, die sich über den überwiegenden Teil des Umfangs der Umfangswand (25) erstrecken.

10. Nietvorrichtung nach Anspruch 8 oder 9, **dadurch gekennzeichnet, dass** die Nietvorrichtung (1) eine Nietstempelhalteeinrichtung umfasst, die eine Aufnahmehülse (17) mit einem Endbereich aufweist, in dem der Nietstempel (22) befestigt ist, wobei die Wärmestrahlungsquelle (19) innerhalb der Aufnahmehülse (17) derart angeordnet ist oder der Heißluftauslass der Heißgasquelle derart auf den Nietstempel (22) ausgerichtet ist, dass die Wärmestrahlung oder das Heißgas rückseitig auf die Stirnwand (24) des Nietstempels (22) geleitet wird.

11. Nietvorrichtung nach einem der Ansprüche 7 bis 10, **dadurch gekennzeichnet, dass** der Kühlmittelauslass (39) innerhalb oder an der Aufnahmehülse (17) angeordnet ist.

12. Nietvorrichtung nach einem der Ansprüche 4 bis 11, **dadurch gekennzeichnet, dass** der Nietstempel (22) aus Metall mit hoher Wärmeleitfähigkeit besteht.

13. Nietvorrichtung nach einem der Ansprüche 4 bis 12, **dadurch gekennzeichnet, dass** der Nietstempel (22) eine mattierte oder dunkle Rückseite zur Beschleunigung der Wärmeaufnahme aufweist.

14. Nietvorrichtung nach einem der Ansprüche 8 bis 13, **dadurch gekennzeichnet, dass** die Stirnwand (24) des Nietstempels (22) dünnwandig ausgebildet ist.
